# EUROPÄISCHE PATENTSCHRIFT

(11) **EP 1 307 369 B1**
(45) Veröffentlichungstag und Bekanntmachung des Hinweises auf die Patenterteilung: **30.06.2004**
(21) Anmeldenummer: 01956317.0
(22) Anmeldetag: 14.07.2001
(51) Int. Cl.: B60T 8/36, F16K 31/06

(54) **MAGNETVENTIL, INSBESONDERE FÜR EINE SCHLUPFGEREGELTE, HYDRAULISCHE FAHRZEUGBREMSANLAGE**
SOLENOID VALVE, IN PARTICULAR FOR A SKID REGULATED HYDRAULIC VEHICLE BRAKE SYSTEM
ELECTROVANNE, EN PARTICULIER POUR SYSTEME DE FREINAGE HYDRAULIQUE ANTIPATINAGE D'UN VEHICULE

(30) Priorität: 04.08.2000 DE 10038091
(43) Veröffentlichungstag der Anmeldung: 07.05.2003
(73) Patentinhaber: ROBERT BOSCH GMBH, 70442 Stuttgart (DE)
(72) Erfinder: WILDE, Werner, 40625 Düsseldorf (DE); MEGERLE, Friedrich, 71679 Asperg (DE); KAWA, Dieter, 71729 Erdmannhausen (DE); SICKINGER, Ulrich, 70839 Gerlingen (DE); SPEER, Harald, 71691 Freiberg (DE); FRITSCH, Siegfried, 87527 Sonthofen (DE); MENZENBACH, Rainer, 87509 Immenstadt (DE); SCHNALZGER, Guenther, 87544 Blaichach (DE); REIZE, Andreas, 70192 Stuttgart (DE); STOEHR, Robert, 21640 Horneburg (DE); REINHOLD, Jochen, 76646 Bruchsal (DE); BUTZ, Thomas, 70825 Korntal-Münchingen (DE); HERR, Johann, 71665 Vaihingen (DE); PECHTHOLD, Ulrich, 71701 Schwieberdingen (DE); LAIER, Christian, 69123 Heidelberg (DE)
(86) Internationale Anmeldenummer: PCT/DE2001/002637
(87) Internationale Veröffentlichungsnummer: WO 2002/012039

(56) Entgegenhaltungen:
- DE-A- 19 710 353
- DE-A- 19 807 130
- PATENT ABSTRACTS OF JAPAN vol. 1998, no. 08, 30. Juni 1998 (1998-06-30) -& JP 10 082478 A (AISIN SEIKI CO LTD), 31. März 1998 (1998-03-31)
- PATENT ABSTRACTS OF JAPAN vol. 1999, no. 08, 30. Juni 1999 (1999-06-30) -& JP 11 063281 A (UNISIA JECS CORP), 5. März 1999 (1999-03-05)

## Beschreibung

### Stand der Technik

Die Erfindung geht aus von einem Magnetventil nach der Gattung des Anspruchs 1. Aus der DE 198 07 130 A1 ist ein derartiges Magnetventil bereits bekannt.

Dieses Magnetventil ist in einem Ventilblock einer hydraulischen Fahrzeugbremsanlage angeordnet und weist eine Führungshülse für einen Anker auf. Die Führungshülse ist mit einer Ringstufe erweitert, welche eine wenigstens annähernd radial von einer zylindrischen Mantelwandung der Führungshülse ausgehende Stirnwand hat. Auf die Führungshülse ist eine Befestigungsbuchse aufgeschoben, die sich passend an die Mantelwand der Führungshülse, die Stirnwand der Ringstufe sowie an eine ausgerundete Kehle zwischen der Mantelwand und der Stirnwand anschmiegt. Die Führungshülse und die Befestigungsbuchse sind in einer Bohrung des Ventilblocks aufgenommen, wobei die Befestigungsbuchse in eine Stufe der Bohrung eingesetzt ist. Die Befestigungsbuchse ist durch eine fluiddichte Verstemmung aus dem Material des Ventilblocks mit dem Ventilblock verbunden.

Außerdem ist es aus der DE 197 10 353 A1 bekannt, den hydraulischen Teil eines Magnetventils mit einer topfförmigen Ventilhülse auszustatten, die bodenseitig mit einem spanlos erzeugten Ventilsitz eines Sitzventils versehen ist. Die Ventilhülse greift in einen Abschnitt der Bohrung eines Ventilblocks mit umfangsseitigem Presssitz fluiddicht ein und trennt Fluid führende Kanäle, deren Durchgang mit dem Sitzventil schaltbar ist. Damit ist ein zusätzliches Dichtelement entbehrlich.

### Vorteile der Erfindung

Das erfindungsgemäße Magnetventil mit den Merkmalen des Patentanspruchs 1 hat gegenüber dem erstgenannten Entwicklungsstand den Vorteil, dass eine fluiddichte Verbindung zwischen der Führungshülse und der Befestigungsbuchse zugleich mit dem Aufschieben der Buchse auf die Hülse zum Erzeugen des Presssitzes hergestellt wird, indem die Kante der Befestigungsbuchse beim Auftreffen auf die Kehle der Führungshülse einem Umformvorgang unterliegt, der zu einem innigen Anschmiegen von Führungshülse und Befestigungsbuchse in dieser Zone führt. Bei diesem Druckumformen ist die Kehle das Werkzeug und die Kante das plastisch verformte Werkstück. Durch diese Gestaltung wird auf kostengünstige Weise in einem einzigen Montagevorgang sowohl eine Befestigung der Buchse auf der Führungshülse als auch eine Abdichtung zwischen beiden Teilen erzielt.

Durch die in den Unteransprüchen aufgeführten Maßnahmen sind vorteilhafte Weiterbildungen und Verbesserungen des im Patentanspruch 1 beschriebenen Magnetventils gegeben.

### Zeichnung

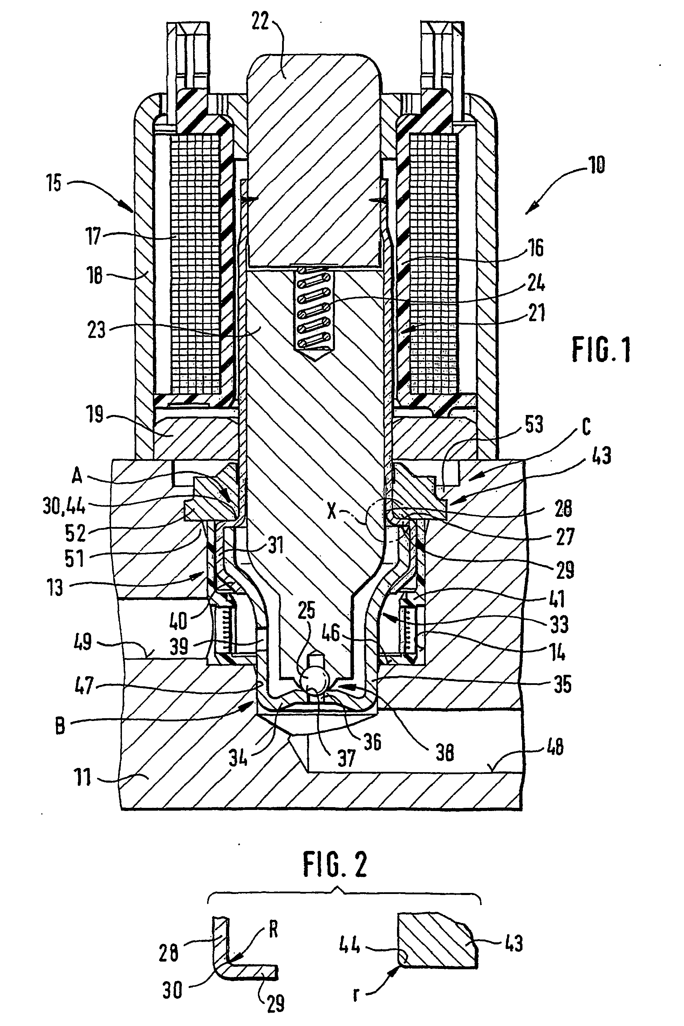

Ein Ausführungsbeispiel der Erfindung ist in der Zeichnung vereinfacht dargestellt und in der nachfolgenden Beschreibung näher erläutert. Es zeigen Figur 1 einen Längsschnitt eines an einem Ventilblock angeordneten Magnetventils und Figur 2 die mit Detail X in Figur 1 markierten Abschnitte von Bauteilen, welche voneinander getrennt sowie im Zustand der Vormontage dargestellt sind.

### Beschreibung des Ausführungsbeispiels

Ein in Figur 1 der Zeichnung wiedergegebenes Magnetventil 10 ist an einem Ventilblock 11 angeordnet und bildet einen Teil einer im Übrigen nicht dargestellten Drucksteuereinrichtung für schlupfgeregelte, hydraulische Fahrzeugbremsanlagen.

Das stromlos geschlossene Magnetventil 10 besteht aus zwei Baugruppen: einem hydraulischen Teil 13, welcher teilweise in einer abgestuften Bohrung 14 des Ventilblocks 11 . aufgenommen ist, und einem elektrischen Teil 15, welcher auf den aus dem Ventilblock aufragenden hydraulischen Teil aufgesteckt ist. Der elektrische Teil 15 besteht im Wesentlichen aus einem Spulenkörper 16 mit einer elektrischen Wicklung 17, einem magnetflussleitenden Spulenmantel 18 und einer magnetflussleitenden Ringscheibe 19.

Der hydraulische Teil 13 des Magnetventils 10 weist eine Führungshülse 21 auf, welche an ihrem dem elektrischen Teil 15 zugeordneten Ende mit einem eingepressten und fluiddicht verschweißten Polkern 22 verschlossen ist. In der Führungshülse 21 ist ein längsverschiebbarer Anker 23 aufgenommen. Der Anker 23 ist mit einer Rückstellfeder 24 am Polkern 22 abgestützt. Polkernabgewandt ist der Anker 23 mit einem kugelförmigen Schließglied 25 versehen.

Die Führungshülse 21 ist mit einer Ringstufe 27 erweitert, welche eine radial von einer zylindrischen Mantelwand 28 der Führungshülse ausgehende Stirnwand 29 hat. Im Übergangsbereich zwischen der Mantelwand 28 und der Stirnwand 29 ist die Führungshülse 21 mit einer ausgerundeten Kehle 30 versehen, welche einen Ausrundungsradius R hat (Figur 2). Die Führungshülse 21 hat polkernabgewandt einen auf die Ringstufe 27 folgenden hohlzylindrischen Abschnitt 31 größeren Durchmessers.

In den hohlzylindrischen Abschnitt 31 der Führungshülse 21 ist von deren polkernabgewandten Seite her eine topfförmige Ventilhülse 33 eingepresst. Die als Tiefziehteil ausgebildete Ventilhülse 33 verjüngt sich zu ihrem Boden 34 hin in einen geraden zylindrischen Mantelabschnitt 35. Am Boden 34 befindet sich ein Durchgang 36 sowie ein hohlkegelförmiger, vorzugsweise durch Prägen erzeugter Ventilsitz 37, an dem der Schließkörper 25 des Ankers 23 in der gezeichneten Stellung des Magnetventils 10 angreift. Das Schließglied 25 und der Ventilsitz 37 bilden ein Sitzventil 38, mit dem eine fluidleitende Verbindung zwischen dem bodenseitigen Durchgang 36 und einem Durchgang 39 in dem Mantelabschnitt 35 der Ventilhülse 33 schaltbar ist. Die Ventilhülse 33 ist an der Führungshülse 21 durch eine am freien Ende des hohlzylindrischen Abschnitts 31 erzeugte Bördelverbindung 40 befestigt. Außerdem ist auf den hohlzylindrischen Abschnitt 31 der Führungshülse 21 eine Filterhülse 41 aufgesteckt, welche den mantelseitigen Durchgang 39 der Ventilhülse 33 übergreift.

Zum hydraulischen Teil 13 des Magnetventils 10 gehört außerdem eine ringförmige Befestigungsbuchse 43. Diese ist von der Seite des Polkerns 22 her auf die Führungshülse 21 aufgeschoben. Die Befestigungsbuchse 43 hat eine der Kehle 30 der Führungshülse 21 zugeordnete umlaufende Kante 44, welche mit einem Abrundungsradius r gefertigt ist, der kleiner ist als der Ausrundungsradius R der Kehle (Figur 2). Im montierten Zustand (wie in Figur 1 dargestellt) schmiegt sich die Befestigungsbuchse 43 passend an die Mantelwand 28 sowie die Stirnwand 29 der Führungshülse 21 an. Dabei greift die Befestigungsbuchse 43 mit Presssitz an der Mantelwand 28 der Führungshülse 21 an. Außerdem ist beim Auftreffen der Kante 44 der Befestigungsbuchse 43 auf die Kehle 30 der Führungshülse 21 ein Angleichen des Abrundungsradius der Kante an den Ausrundungsradius der Kehle durch plastisches Verformen der Kante 44 erfolgt. Dies setzt eine ausreichende Duktilität der Befestigungsbuchse 43 und Gestaltfestigkeit der Führungshülse 21 voraus. Der Presssitz der Befestigungsbuchse 43 auf der Mantelwand 28 sowie die plastisch verformte Kante 44 stellen eine Abdichtung dar, welche in Figur 1 mit A gekennzeichnet ist.

Der aus den vorgenannten Bauteilen (in abweichender Folge wie beschrieben) gefügte hydraulische Teil 13 des Magnetventils 10 stellt eine Baugruppe dar, die wie folgt in der Bohrung 14 des Ventilblocks 11 montiert wird:

Der hydraulische Teil 13 wird mit seinem polkernabgewandten Abschnitt in die Bohrung 14 eingeführt. Dabei greift der Mantelabschnitt 35 der Ventilhülse 33 unter Erzeugung eines Presssitzes in einen auf eine Bohrungsstufe 46 folgenden Abschnitt 47 der Bohrung 14 an. Dies setzt eine ausreichende Formsteifigkeit der Ventilhülse 33 voraus, welche mit gegenüber der Wandstärke der Führungshülse 21 größerer Wandstärke ausgebildet und einer Wärmebehandlung unterzogen ist. Mit dem Presssitz ist eine Abdichtung B zwischen der Ventilhülse 33 und dem Bohrungsabschnitt 47 erzielt, welche fluidführende Kanäle 48 und 49 des Ventilblocks 11 voneinander trennt. Der Einpressvorgang des hydraulischen Teils 13 in die Bohrung 14 wird durch Anschlagen der Befestigungsbuchse 43 an einer mündungsseitigen Ringstufe 51 der Bohrung 14 begrenzt. In dieser Lage des hydraulischen Teils 13 greift die sich bis zur Befestigungsbuchse 43 erstreckende Filterhülse 41 an der Bohrungsstufe 46 an. Durch Verdrängen von Werkstoff des Ventilblocks 11 vom Mündungsrand der Bohrung 14 wird eine einen Absatz 52 der Befestigungsbuchse 43 übergreifende Verstemmung 53 erzeugt. Damit ist eine Abdichtung C zwischen der Befestigungsbuchse 43 und dem Ventilblock 11 geschaffen. Auf diese Weise ist der hydraulische Teil 13 des Magnetventils 10 ohne die Verwendung gummielastischer Abdichtmittel gegen den Austritt von Fluid aus der Bohrung 14 des Ventilblocks 11 sowie gegen Umgehen des Sitzventils 38 geschützt.

Abschließend wird das Magnetventil 10 durch Aufstecken des elektrischen Teils 15 auf den aus dem Ventilblock 11 aufragenden Abschnitt des hydraulischen Teils 13 vervollständigt.

## Patentansprüche

1. Magnetventil (10), insbesondere für eine schlupfgeregelte, hydraulische Fahrzeugbremsanlage, welches in einem Ventilblock (11) angeordnet ist, mit den folgenden Merkmalen:
1.1 das Magnetventil (10) weist eine Führungshülse (21) für einen Anker (23) auf ,
1.2 die Führungshülse (21) ist mit einer Ringstufe (27) erweitert, welche eine wenigstens annähernd radial von einer zylindrischen Mantelwand (28) der Führungshülse (21) ausgehende Stirnwand (29) hat,
1.3 auf die Fühnmgshülse (21) ist eine Befestigungsbuchse (43) aufgeschoben, die sich passend an die Mantelwand (28) der Führungshülse (21), die Stirnwand (29) der Ringstufe (27) sowie an eine ausgerundete Kehle (30) zwischen der Mantelwand (28) und der Stirnwand (29) anschmiegt,
1.4 die Führungshülse (21) und die Befestigungsbuchse (43) sind in einer Bohrung (14) des Ventilblocks (11) aufgenommen, wobei die Befestigungsbuchse (43) in eine Stufe (51) der Bohrung (14) eingesetzt ist,
1.5 die Befestigungsbuchse (43) ist durch eine fluiddichte Verstemmung (53) aus dem Material des Ventilblocks (11) mit dem Ventilblock (11) verbunden,
**gekennzeichnet durch** die weiteren Merkmale:
1.6 die Befestigungsbuchse (43) ist mit Presssitz auf der Mantelwand (28) der Führungshülse (21) geführt,
1.7 die Befestigungsbuchse (43) hat eine der Kehle (30) der Führungshülse (21) zugeordnete, umlaufende Kante (44), welche mit einem Abrundungsradius (r) gefertigt ist, der kleiner ist als ein Ausrundungsradius (R) der Kehle 30,
1.8 bei auf der Führungshülse (21) montierter Befestigungsbuchse (43) ist der Abrundungsradius (r) der Kante (44) **durch** plastisches Verformen der Kante (44) an der Kehle (30) wenigstens annähernd an deren Ausrundungsradius (R) angeglichen,
1.9 in einem auf die Ringstufe (27) folgenden hohlzylindrischen Abschnitt (31) der Führungshülse (21) ist eine topfförmige Ventilhülse (33) eingepreßt,
1.10 Die Ventilhülse (33) ist als tiefgezogenes Bauteil mit bodenseitig integriertem Ventilsitz (37) ausgebildet.

2. Magnetventil nach Anspruch 1, **dadurch gekennzeichnet, dass** die topfförmige Ventilhülse (33) in den hohlzylindrischen Abschnitt (31) der Führungshülse (21) eingepresst und durch eine Bördelverbindung (40) an ihr befestigt ist.

3. Magnetventil nach Anspruch 2, **dadurch gekennzeichnet, dass** die Ventilhülse (33) mit gegenüber der Wandstärke der Führungshülse (21) größerer Wandstärke ausgebildet ist.

4. Magnetventil nach einem der Ansprüche 1 bis 3, **dadurch gekennzeichnet, dass** die Ventilhülse (33) mantelseitig sowie bodenseitig einen fluidleitenden Durchgang (39, 36) hat, von denen der bodenseitige Durchgang (36) in den durch Prägen erzeugten Ventilsitz (37) des Sitzventils (38) mündet, welches vom Anker (23) schaltbar ist.

5. Magnetventil nach Anspruch 4, **dadurch gekennzeichnet, dass** die Ventilhülse (33) mit einem zwischen den beiden Durchgängen (36, 39) liegenden Mantelabschnitt (35) mit Presssitz fluiddicht in einem auf eine Bohrungsstufe (46) folgenden Abschnitt (47) der Bohrung (14) des Ventilblocks (11) aufgenommen ist.

6. Magnetventil nach Anspruch 5, **dadurch gekennzeichnet, dass** auf den Abschnitt (31) der Führungshülse (21) eine Filterhülse (41) aufgesteckt ist, die sich zwischen der Befestigungsbuchse (43) und der Bohrungsstufe (46) erstreckt und dem mantelseitigen Durchgang (39) der Ventilhülse (33) übergreift.

## Claims

1. Solenoid valve (10), in particular for a slip-controlled hydraulic vehicle brake system, the said solenoid valve being arranged in a valve block (11) and having the following features:
1.1 the solenoid valve (10) has a guide sleeve (21) for an armature (23),
1.2 the guide sleeve (21) is widened with an annular step (27) which has an end wall (29) emanating at least approximately radially from a cylindrical casing wall (28) of the guide sleeve (21),
1.3 the guide sleeve (21) has pushed onto it a fastening bush (43) which fits snugly onto the casing wall (28) of the guide sleeve (21) and the end wall (29) of the annular step (27) and also onto a rounded fillet (30) between the casing wall (28) and the end wall (29),
1.4 the guide sleeve (21) and the fastening bush (43) are received in a bore (14) of the valve block (11), the fastening bush (43) being inserted into a step (51) of the bore (14),
1.5 the fastening bush (43) is connected to the valve block (11) by means of a fluid-tight caulking (53) consisting of the material of the valve block (11),
**characterized by** the further features:
1.6 the fastening bush (43) is guided with a press fit on the casing wall (28) of the guide sleeve (21),
1.7 the fastening bush (43) has a peripheral edge (44) which is assigned to the fillet (30) of the guide sleeve (21) and which is manufactured with a rounding radius (r) smaller than a rounding radius (R) of the fillet (30),
1.8 with the fastening bush (43) mounted on the guide sleeve (21), the rounding radius (r) of the edge (44) is matched at least approximately to the rounding radius (R) of the fillet (30) as a result of the plastic deformation of the edge (44) at the latter,
1.9 a pot-shaped valve sleeve (33) is pressed in in a hollow-cylindrical portion (31), following the annular step (27), of the guide sleeve (21),
1.10 the valve sleeve (33) is produced as a deep-drawn component with a valve seat (37) integrated on the bottom side.

2. Solenoid valve according to Claim 1, **characterized in that** the pot-shaped valve sleeve (33) is pressed into the hollow-cylindrical portion (31) of the guide sleeve (21) and is fastened to the latter by means of a crimped connection (40).

3. Solenoid valve according to Claim 2, **characterized in that** the valve sleeve (33) is produced with a wall thickness greater than the wall thickness of the guide sleeve (21).

4. Solenoid valve according to one of Claims 1 to 3, **characterized in that** the valve sleeve (33) has, on a casing side and on a bottom side, a fluid-conducting passage (39, 36), of which the bottom-side passage (36) issues into the valve seat (37), produced by stamping, on the seat valve (38) which can be switched by the armature (23).

5. Solenoid valve according to Claim 4, **characterized in that** the valve sleeve (33) is received, with a casing portion (35) lying between the two passages (36, 39), with a press fit in a fluid-tight manner in a portion (47), following a bore step (46), of the bore (14) of the valve block (11).

6. Solenoid valve according to Claim 5, **characterized in that** the portion (31) of the guide sleeve (21) has slipped onto it a filter sleeve (41) which extends between the fastening bush (43) and the bore step (46) and which overlaps the casing-side passage (39) of the valve sleeve (33).

## Revendications

1. Electrovanne (10), en particulier pour un système de freinage hydraulique antipatinage d'un véhicule, disposée dans un bloc de commande (11) et dotée des spécifications suivantes :
- l'électrovanne (10) présente un manchon de guidage (21) pour un induit (23),
- le manchon de guidage (21) est élargi à l'aide d'un épaulement annulaire (27), qui possède une paroi frontale (29) s'étendant au moins approximativement de façon radiale à partir d'une enveloppe cylindrique (28) du manchon de guidage (21),
- sur le manchon de guidage (21) est insérée une douille de fixation (43), qui épouse la forme de l'enveloppe (28) du manchon de guidage (21), de la paroi frontale (29) de l'épaulement annulaire (27) ainsi que d'une gorge arrondie (28) située entre l'enveloppe (28) et la paroi frontale (29),
- le manchon de guidage (21) et la douille de fixation (43) sont logés dans une perçage (14) pratiqué dans le bloc de commande (11), la douille de fixation (43) étant montée dans un gradin (51) du perçage (14),
- la douille de fixation (43) est reliée au bloc de commande (11) par le biais d'un matage étanche aux liquides (53) à partir du matériau du bloc de commande (11),
**caractérisée en ce que**
- la douille de fixation (43) est insérée sur l'enveloppe (28) du manchon de guidage (21) par assemblage à la presse,
- la douille de fixation (43) possède un bord (44) associé à la gorge (30) du manchon de guidage (21) en entourant celle-ci, et fabriqué avec un rayon d'arrondi (r) inférieur à un rayon de courbure (R) de la gorge (30),
- au niveau de la douille de fixation (43) montée sur le manchon de guidage (21), le rayon d'arrondi (r) du bord (44) est adapté par déformation plastique du bord (44) à la gorge (30), pour correspondre au moins approximativement à son rayon de courbure (R),
- dans une partie cylindrique creuse (31) du manchon de guidage (21) située après l'épaulement annulaire (27) est insérée une gaine de soupape (33) en forme de pot, et
- la gaine de soupape (33) est configurée sous la forme d'un composant embouti comportant, du côté du fond, un siège de soupape intégré (37).

2. Electrovanne selon la revendication 1,
**caractérisée en ce que**
la gaine de soupape (33) en forme de pot est insérée dans la partie cylindrique creuse (31) du manchon de guidage (21) et y est fixée par le d'un sertissage (40).

3. Electrovanne selon la revendication 2,
**caractérisée en ce que**
la gaine de soupape (33) est configurée avec une épaisseur de paroi supérieure à l'épaisseur de paroi du manchon de guidage (21).

4. Electrovanne selon l'une quelconques des revendications 1 à 3,
**caractérisée en ce que**
la gaine de soupape (33) possède, du côté de l'enveloppe et du côté du fond, un passage conducteur de liquide (39, 36), dont le passage situé du côté du fond (36) débouche dans le siège de soupape (37) formé par estampage de la soupape à clapet (38), et qui est actionné par l'induit (23).

5. Electrovanne selon la revendication 4,
**caractérisée en ce que**
la gaine de soupape (33), avec une partie l'enveloppe (35) située entre les deux passages (36, 39), est logée par assemblage à la presse, de façon étanche aux liquides, dans une partie (47) du perçage (14) du bloc de commande (11) faisant suite à un épaulement de perçage (46).

6. Electrovanne selon la revendication 5,
**caractérisée en ce que**
sur la partie (31) du manchon de guidage (21) est placé un manchon de filtre (41), qui s'étend entre la douille de fixation (43) et l'épaulement de perçage (46) et qui dépasse sur le passage (39) du côté de l'enveloppe de la gaine de soupape (33).
